# EUROPÄISCHE PATENTSCHRIFT

(11) **EP 2 273 723 B1**
(45) Veröffentlichungstag und Bekanntmachung des Hinweises auf die Patenterteilung: **13.02.2013**
(21) Anmeldenummer: 09008746.1
(22) Anmeldetag: 03.07.2009
(51) Int. Cl.: H04L 12/24

(54) **Verfahren und hierarchisches Kommunikationsnetzwerk zur adaptiven Steuerung von Netzwerkressourcen**
Method and hierarchical communication network for adaptive control of network resources
Procédé et réseau de communication hiérarchique destinés à la commande adaptative de ressources de réseau

(43) Veröffentlichungstag der Anmeldung: 12.01.2011
(73) Patentinhaber: Deutsche Telekom AG, 53113 Bonn (DE)
(72) Erfinder: Lange, Christoph, 10318 Berlin (DE); Gladisch, Andreas, 13129 Berlin (DE)
(74) Vertreter: Kampfenkel, Klaus

(56) Entgegenhaltungen:
- EP-A- 1 981 218
- US-A1- 2002 007 464
- GLADISCH A ET AL: "Power efficiency of optical versus electronic access networks" IEEE 34TH EUROPEAN CONFERENCE ON OPTICAL COMMUNICATION, 21. September 2008 (2008-09-21), XP002554911

## Beschreibung

Die Erfindung betrifft ein Verfahren zur adaptiven Steuerung oder Zuteilung von Netzwerkressourcen in einem hierarchischen Kommunikationsnetzwerk sowie ein derartiges hierarchisches Kommunikationsnetzwerk zur Durchführung des Verfahrens.

Auf dem Gebiet der Telekommunikation werden hierarchisch aufgebaute ICT-Systeme (ICT steht für Information and Communication Technology) eingesetzt, um den Dienstanforderungen, die Privat- und Geschäftskunden an Netze und Systeme stellen, in einer effizienten Weise gerecht werden zu können. Privatkunden verfügen zum Beispiel über Endgeräte oder über komplexe Heimnetze, während Geschäftskunden in der Regel umfangreiche Firmennetze benötigen. An Heimnetze können Telefone, Rechner, Medienempfänger usw. angeschlossen sein. Die Kundennetze sind über Zugangsnetze mit öffentlichen Netzen verbunden. An das Zugangsnetz kann sich ein Aggregationsnetz anschließen, das der Konzentration des Verkehrs und dem Übergang in ein Kern- oder Backbonenetz dient. Das Kernnetz wiederum stellt den Datentransport über größere Entfernungen sicher und erlaubt die Anschaltung benachbarter - auch internationaler - Netze und die Anschaltung an Dienstplattformen (Rechenzentren).

Als kritischer Faktor bei der Planung von ICT-Systemen wird zunehmend der Energieverbrauch gesehen, der das Wachstum von ICT-Systemen begrenzen könnte. Die an sich bekannten technologischen Weiterentwicklungen elektronischer oder optischer Bauelemente können die Energieeffizienz von Netzelementen in ICT-Systemen verbessern.

Ein allgemeiner Überblick über den Energieverbrauch in Kommunikationsnetzwerken wird beispielsweise in "Power efficiency of optical versus electronic access networks" von A. Gladisch et al., IEEE 34th European Conference on Optical Communication, 2008, gegeben.

Aus US 2002/0007464 A1 ist ein Verfahren zum Energie-Management von Servern und Server-Clustern bekannt, bei welchem der Energieverbrauch insbesondere Last- und QoS (Quality of Service)-abhängig angepasst wird, wobei die Anpassung insbesondere durch Aktivieren unterschiedlicher Leistungsmodi erfolgt, zwischen denen bei Erreichen eines jeweiligen Grenzwerts für die CPU-Auslastung umgeschaltet wird, und wobei die Grenzwerte für die CPU-Auslastung dynamisch in Abhängigkeit einer prognostizierten zukünftigen Last angepasst werden können. Das Überschreiten eines Grenzwerts für die CPU-Auslastung wird von dem jeweiligen Server an ein Mastermodul gemeldet, wobei Server und Mastermodule in unterschiedlichen Subnetzen angeordnet sein können.

In EP 1 981 218 A1 wird ein Verfahren zur Umschaltung zwischen unterschiedlichen Übertragungsmodi einer DSL-Verbindung beschrieben, wobei insbesondere die Upstream-Daten analysiert werden und bei Erkennen einer Benutzeranfrage wie zum Beispiel einer HTTP- oder IGMP-Anfrage, die darauf hindeutet, dass in Kürze eine große Datenmenge in Downstream-Richtung übertragen wird, in den Übertragungsmodus höherer Downstream-Bandbreite geschaltet wird.

Der vorliegenden Erfindung liegt die Aufgabe zu Grunde, ein Verfahren zur adaptiven Steuerung von Netzwerkressourcen in einem hierarchischen Kommunikationsnetzwerk zur Verfügung zu stellen, mit welchem der Energieverbrauch in einem hierarchischen Kommunikationsnetzwerk minimiert werden kann.

Ein Kerngedanke der Erfindung ist darin zu sehen, den zu erwartenden Datenverkehr in einem hierarchischen Kommunikationsnetzwerk zu ermitteln und in Abhängigkeit davon die Netzwerkressourcen in den verschiedenen Netzebenen des hierarchischen Kommunikationsnetzwerks zu steuern, so dass der Energieverbrauch minimiert werden kann. Hierzu kann das Verkehrsaufkommen in der untersten Netzebene, auch Hierarchieebene genannt, ermittelt und daraus eine Verkehrsprognose für die unterste Netzebene erstellt werden. Aus dem zukünftig erwarteten Verkehrsaufkommen kann unmittelbar der Energiebedarf der untersten Netzebene abgleitet werden. Die Verkehrsprognose wird dann an die darüber liegenden Netzebenen signalisiert. In jeder Netzebene werden anschließend die jeweiligen Netzressourcen in Abhängigkeit der Verkehrsprognose aktiviert oder deaktiviert. Auf diese Weise werden jeder Hierarchieebene des Kommunikationsnetzwerkes die Netzwerkressourcen zugeteilt, die notwendig sind, um den zu erwartenden Verkehrsbedarf abwickeln zu können. Damit stellt die Erfindung ein Verkehrsprognose-basiertes Verfahren zur Verfügung, mit dem bereits im Vorhinein, also ohne Kenntnis des aktuellen Verkehrsaufkommens, eine Adaption der Netzwerkressourcen auf der Grundlage von erstellten Verkehrsprognosen vorgenommen werden kann.

Das oben genannte technische Problem wird zum Einen durch die Verfahrensschritte des Anspruchs 1 gelöst.

Demgemäß wird ein Verfahren zur adaptiven Steuerung von Netzwerkressourcen in einem hierarchischem Kommunikationsnetzwerk zur Verfügung gestellt. In einem vorbestimmten Netzelement einer ersten untergeordneten Netzwerkebene werden Verkehrs-Prognosedaten hinsichtlich der ersten untergeordneten Netzebene bereitgestellt. Diese Datenverkehrs-Prognosedaten werden einem vorbestimmten Netzelement einer übergeordneten Netzebene übergeben. In Abhängigkeit von den empfangenen Datenverkehrs-Prognosedaten der ersten untergeordneten Netzebene werden die Netzwerkressourcen der übergeordneten Netzebene gesteuert, und zwar derart, dass der Energieverbrauch in der übergeordneten Netzebene minimiert werden kann.

Bei den Netzwerkressourcen kann es sich um die zur Verfügung gestellte CPU-Zeit eines Netzelements, die für eine Verbindung bereit gestellte Bitrate, um die Anzahl von aktivierbaren oder deaktiverbaren Ports von Netzelementen und dergleichen handeln. Unter adaptiver Steuerung von Netzwerkressourcen versteht man auch das Aktivieren oder Deaktivieren von Portkarten, das Zu- oder Abschalten von Netzelementen selbst oder das entsprechende Umleiten des Datenverkehrs je nach vorhergesagter Verkehrslastsituation.

Der Verfahrensschritt des Steuerns von Netzwerkressourcen deckt auch den Fall ab, dass Netzwerkressourcen in Abhängigkeit von den Datenverkehrs-Prognosedaten in einer ausreichenden Menge den Netzelementen der jeweiligen Netzebene zugeteilt werden.

An dieser Stelle sei angemerkt, dass es sich bei der untergeordneten Netzebene und der übergeordneten Netzebene um beliebige miteinander verbundene Netzebenen eines mehrschichtigen hierarchischen Kommunikationsnetzwerkes handeln kann. Lediglich beispielhaft kann die untergeordnete Netzebene der untersten Netzebene des hierarchischen Kommunikationsnetzes entsprechen.

Das Kommunikationsnetzwerk kann derart ausgestaltet sein, dass mehrere untergeordnete Netzebenen mit der übergeordneten Netzebene verbunden sind. In diesem Fall werden in einem vorbestimmten Netzelement wenigstens einer zweiten untergeordneten Netzebene Datenverkehrs-Prognosedaten hinsichtlich der zweiten untergeordneten Netzebene bereit gestellt. Diese Datenverkehrs-Prognosedaten werden dem vorbestimmten Netzelement der übergeordneten Netzebene übergeben. Die Netzwerkressourcen der übergeordneten Netzebene werden dann in Abhängigkeit von den empfangenen Datenverkehrs-Prognosedaten der ersten und zweiten untergeordneten Netzebene gesteuert, und zwar wiederum derart, dass der Energieverbrauch in der übergeordneten Netzebene minimiert werden kann.

Das Kommunikationsnetzwerk kann eine weitere Netzebene aufweisen, die der übergeordneten Netzebene übergeordnet ist. Diese Netzebene wird lediglich zur besseren Unterscheidung als nächsthöhere Netzebene bezeichnet. Die hinsichtlich der ersten und zweiten untergeordneten Netzebene bereitgestellten Datenverkehrs-Prognosedaten werden vom vorbestimmten Netzelement der übergeordneten Netzebene zu einem vorbestimmten Netzelement der nächsthöheren Netzebene übertragen. In Abhängigkeit der empfangenen Datenverkehrs-Prognosedaten der ersten und zweiten untergeordneten Netzebene werden die Netzwerkressourcen der nächsthöheren Netzebene gesteuert, und zwar wiederum derart, dass der Energieverbrauch in der nächsthöheren Netzebene und somit im gesamten hierarchischen Kommunikationsnetzwerk minimiert werden kann.

Das vorbestimmte Netzelement der übergeordneten Netzebene kann die empfangenen Datenverkehrs-Prognosedaten der ersten und zweiten untergeordneten Netzebene vor der Übertragung zum vorbestimmten Netzelement der nächsthöheren Netzebene aggregieren.

Der Schritt des Bereitstellens der Datenverkehrs-Prognosedaten hinsichtlich der ersten und/oder zweiten untergeordneten Netzebene weist folgende Schritte auf:
Überwachen und Schätzen des zu erwartenden Datenverkehrs in der jeweiligen untergeordneten Netzebene und Ermitteln einer entsprechenden Datenverkehrs-Prognose.

Angemerkt sei an dieser Stelle, dass zum Überwachen und Schätzen des in der jeweiligen untergeordneten Netzebene zu erwartenden Datenverkehrs an sich bekannte Verkehrsmonitoring-Verfahren und Verfahren zur Verkehrsschätzung zum Einsatz kommen können.

Denkbar ist, dass die vorbestimmten Netzelemente aus den bereitgestellten Datenverkehrs-Prognosedaten zeitbasierte Kurven erstellen, die in einem entsprechenden Speicher abgelegt werden können. Die zeitbasierten Kurven können dann in Form der dazu gehörenden Datenverkehrs-Prognosedaten der nächsthöheren Netzebene zur Verfügung gestellt werden.

Der Schritt des Überwachens und Schätzens des in den jeweiligen untergeordneten Netzebenen zu erwartenden Datenverkehrs kann weiterhin folgende Schritte aufweisen:
Speichern von vorbestimmten Parametern für jedes Netzelement der jeweiligen untergeordneten Netzebene;
Erfassen des Aktivierens oder Deaktivierens von Netzelementen der jeweiligen untergeordneten Netzebene und
Berechnen der zu erwartenden Bitrate in Abhängigkeit von den Parametern der Netzelemente.

Bei den Netzelementen kann es sich um Sensoren, eine Set-Top-Box, Computer, Multimediasysteme und ähnliches handeln.

Vorbestimmte Parameter eines Netzelementes sind zum Beispiel die Bitrate oder Datenmenge, welche ein aktiviertes Netzelement pro Zeiteinheit empfangen oder übertragen kann. Wird das Aktivieren und Deaktivieren von Netzelementen in der jeweiligen untergeordneten Netzebene über einen vorbestimmten Zeitraum überwacht, kann das vorbestimmte Netzelement der untergeordneten Netzebene eine Datenverkehrsprognose für diese untergeordnete Netzebene erstellen.

Gemäß einer vorteilhaften Weiterbildung werden die Netzwerkressourcen des vorbestimmten Netzelementes und/oder weitere Netzelemente jeder Netzebene in Abhängigkeit von den bereitgestellten Datenverkehrs-Prognosedaten gesteuert, und zwar wiederum derart, dass der Energieverbrauch in der jeweiligen Netzebene reduziert werden kann.

Angemerkt sei, dass ein vorbestimmtes Netzelement einer untergeordneten Netzebene und ein vorbestimmtes Netzelement einer übergeordneten Netzebene, die mit der untergeordneten Netzebene verbunden ist, nicht als räumlich getrennte Elemente ausgebildet sein müssen. Sie können gemeinsam auch in einem einzigen Gerät implementiert sein.

Um optimale Datenverkehrsprognosen erstellen zu können, werden die bereitgestellten Datenverkehrs-Prognosedaten zu vorbestimmbaren Zeitpunkten aktualisiert.

Die Datenverkehrs-Prognosedaten und somit die daraus erstellten Datenverkehrsprognosen werden gemäß einem definierten Signalisierungsprotokoll von einer untergeordneten Netzebene zu einer übergeordneten Netzebene übertragen.

Das oben genannte technische Problem wird zum Anderen durch ein hierarchisches Kommunikationsnetzwerk zur adaptiven Steuerung von Netzwerkressourcen gelöst.

Demgemäß ist ein erstes, einer untergeordneten Netzebene zugeordnetes Netzelement vorgesehen, welches eine Einrichtung zum Bereitstellen von Datenverkehrs-Prognosedaten hinsichtlich der untergeordneten Netzebene sowie eine Einrichtung zum Übergeben der Datenverkehrs-Prognosedaten an ein zweites Netzelement einer übergeordneten Netzebene aufweist. Das zweite, der übergeordneten Netzebene zugeordnete Netzelement weist eine Einrichtung zum Steuern der Netzwerkressourcen des zweiten Netzelementes und/oder weiterer Netzelemente der übergeordneten Netzebene in Abhängigkeit von den empfangenen Datenverkehrs-Prognosedaten auf.

Vorteilhafterweise kann auch das erste, der untergeordneten Netzebene zugeordnete Netzelement eine Einrichtung zum Steuern der Netzwerkressourcen des ersten Netzelementes und/oder weiterer Netzelemente der untergeordneten Netzebene aufweisen, wobei die Steuerung wiederum in Abhängigkeit der Datenverkehrs-Prognosedaten erfolgt.

Auch das zweite, der übergeordneten Netzebene zugeordnete Netzelement kann die vom ersten Netzelement empfangenen Datenverkehrs-Prognosedaten an ein drittes, einer nächsthöheren Netzebene zugeordnetes Netzelement übertragen.

Die Netzelemente verfügen somit über die Fähigkeit, unter Ansprechen auf Datenverkehrs-Prognosedaten Netzwerkressourcen einer Netzebene derart zu steuern, dass der Energieverbrauch in der jeweiligen Netzebene minimiert werden kann. Zudem sind sie in der Lage, Datenverkehrs-Prognosedaten an eine nächsthöhere Netzebene zu übertragen.

### Demzufolge ergibt sich ein hierarchisches

Kommunikationsnetzwerk mit mehrstufiger Weitergabe der Datenverkehxsprognosen, so dass jeweils in jeder Netzebene die Ressourcen zugeteilt und dem zu erwartenden Verkehrsaufkommen mit dem Ziel angepasst werden können, den Energieverbrauch zu minimieren.

Die Erfindung wird nachfolgend anhand eines Ausführungsbeispiels in Verbindung mit den beiliegenden Zeichnungen näher erläutert. Es zeigen:
- Fig. 1: drei Netzebenen eines hierarchischen Kommunikationsnetzwerks, in welchem die Erfindung verwirklicht wird, und
- Fig. 2: zwei Netzebenen des hierarchischen Kommunikationsnetzwerks.

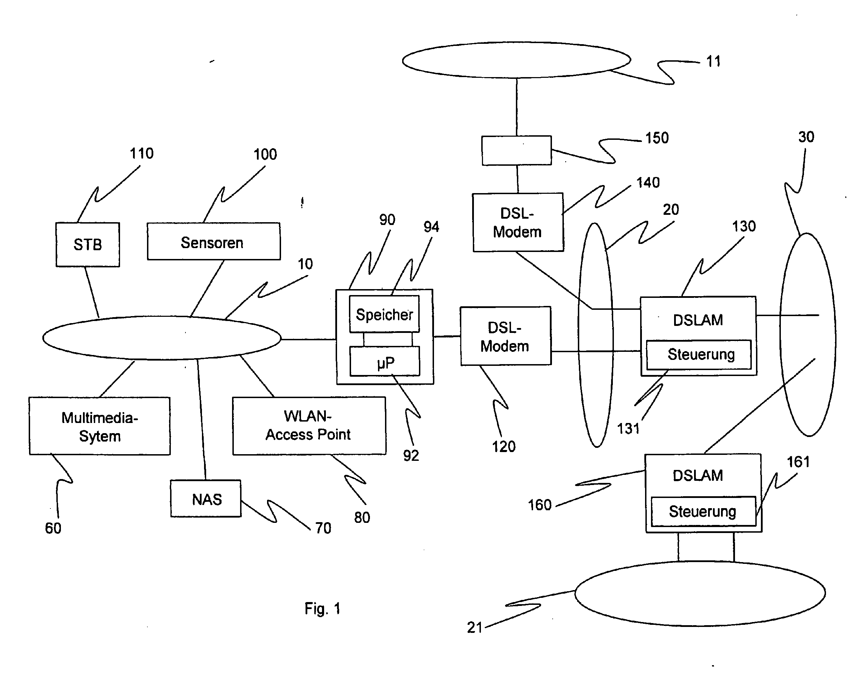

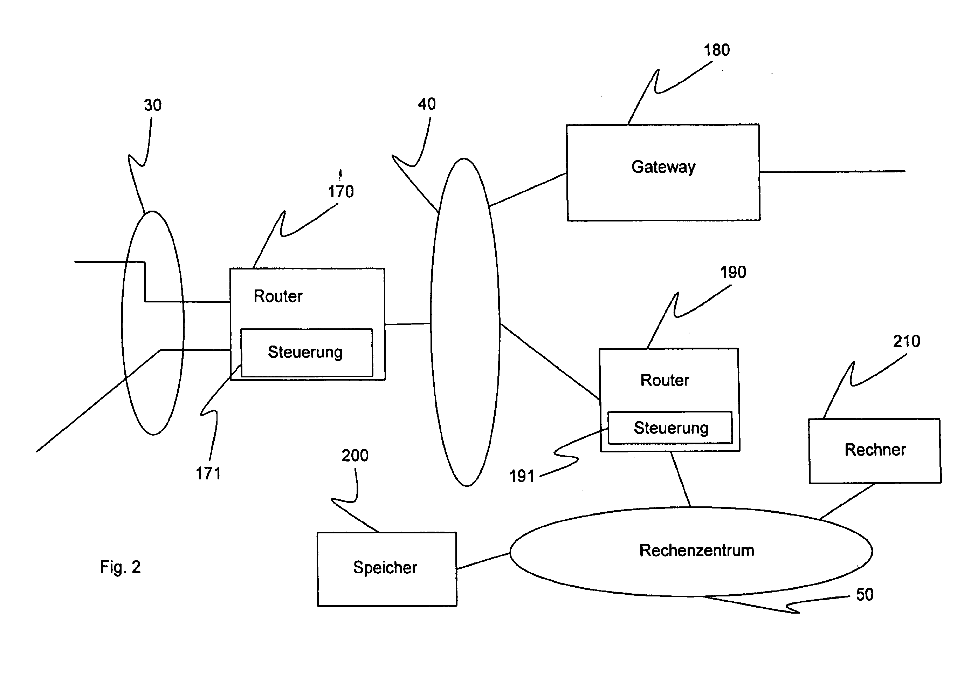

Die Figuren 1 und 2 zeigt ein beispielhaftes hierarchisches Kommunikationsnetzwerk, welches, wie Fig. 1 darstellt, als untergeordnete Hierarchie- oder Netzebene 10 ein lokales Netz aufweist. Das lokale Netz 10 kann auch als Heimnetz bezeichnet werden. Die untergeordnete Netzebene 10 entspricht im vorliegenden Beispiel der untersten Netzebene des hierarchischen Kommunikationsnetzwerks. Ein weiteres lokales Netz bildet eine zweite untergeordnete Netzebene 11. Angemerkt sei, dass natürlich eine Vielzahl von lokalen Netzen oder Heimnetzen als unterste Netzebenen vorgesehen sein können. Im vorliegenden Beispiel sind die beiden untersten Netzebenen 10 und 11 mit einer übergeordneten Netzebene 20 verbunden, welche im dargestellten Beispiel ein Zugangsnetz ist. In der Fig. 1 ist eine weitere übergeordnete Netzebene 21 als Zugangsnetz dargestellt, an welches wiederum eine oder mehrere untergeordnete Netzebenen in Form von lokalen Netzen oder Heimnetzen angeschlossen sein kann. Eine nächsthöhere, dritte Netzebene 30 wird im vorliegenden Beispiel durch ein sogenanntes Aggregationsnetz gebildet, an welches die als übergeordnete Netzebenen 20 und 21 ausgebildeten Zugangsnetze angeschlossen sind. Obwohl lediglich ein Aggregationsnetz dargestellt ist, können weitere nebengeordnete Aggregationsnetze vorgesehen sein. Das als nächsthöhere Netzebene 30 ausgebildete Aggregationsnetz ist mit einem Kern- oder Backbonenetz verbunden, welches die höchste Netzebene 40 des beispielhaften hierarchischen Kommunikationsnetzwerks bildet. Diese Netzebenen sind in Fig. 2 dargestellt.

Wie Fig. 1 zeigt, können an das lokale Netz 10 beispielsweise Sensoren 100 angeschlossen sein. Bei den Sensoren 100 kann es sich um Temperatursensoren, Rauchmelder, Überwachungssensoren und dergleichen handeln. Weiterhin kann an das lokale Netz 10 eine Set-Top-Box 110, ein Multimediasystem 60, ein sogenannter Network Attached Server (NAS) 70 und ein WLAN Access Point 80 angeschlossen sein. Das lokale Netz 10 wird von einem Netzelement 90 abgeschlossen, welches die Funktionalitäten eines an sich bekannten integrierten Zugriffsgeräts, das auch als Integrated Access Device (IAD) oder Home Gateway bekannt ist, aufweisen kann. In dem Zugriffsgerät 90 können ein Speicher 94 und ein programmierbarer Mikroprozessor 92 implementiert sein. Das Zugriffsgerät kann neben den an sich bekannten Funktionalitäten noch eine Verkehrsüberwachung und eine Verkehrsschätzung hinsichtlich des lokalen Netzes 10 durchführen. Die Verkehrsüberwachung und -schätzung liefert Datenverkehrs-Prognosedaten hinsichtlich des lokalen Netzes 10, aus denen der Mikroprozessor 92 eine Datenverkehrsprognose erstellen und im Speicher 94 hinterlegen kann. Ist die übergeordnete Netzebene 20 als kupferbasiertes Zugangsnetz ausgebildet, kann die unterste Netzebene 10 über ein DSL-Modem 120 mit dem Zugangsnetz 20 verbunden werden. In ähnlicher Weise kann das lokale Netz 11 über ein DSL-Modem 140 mit dem Zugangsnetz 20 verbunden werden. Auch an das lokale Netz 11 kann ein Zugriffsgerät 150 zugeordnet, das entsprechend dem Zugriffsgerät 90 ausgebildet sein kann. Die in der Fig. 1 getrennt dargestellten Komponenten, nämlich das Zugriffsgerät 90 bzw. 150 und das DSL-Modem 120 bzw. 140, können jeweils auch als ein Gerät ausgebildet sein. Die Zugriffsgeräte 90 und 150 können jeweils als ein vorbestimmtes Netzelement betrachtet werden.

Handelt es sich bei der übergeordneten Netzebene 20 um ein optisches Zugangsnetz, werden die lokalen Netze 10 und 11 jeweils über einen optischen Netzwerkabschluss, auch Optical Netzwork Termination (ONT) genannt, an das Zugangsnetz 20 angeschlossen. Handelt es sich bei der übergeordneten Netzebene 20 um ein Mobilfunknetz, so können die lokalen Netze 10 und 11 jeweils über eine Basisstation mit dem Mobilfunknetz verbunden werden.

Ist, wie beispielhaft erläutert, die übergeordnete Netzebene 20 ein kupferbasiertes Zugangsnetz 20, so ist dem Zugangsnetz 20 ein DSLAM 130 als Netzelement oder Zugangsknoten zugeordnet. Das DSLAM 130 weist eine Steuereinrichtung 131 und eine Speichereinrichtung (nicht dargestellt) auf. Die Steuereinrichtung 131 ist derart ausgebildet ist, dass sie unter Ansprechen auf die von den Zugriffsgeräten 90 und 150 empfangenen Datenverkehrs-Prognosedaten die Netzwerkressourcen des DSLAMs 130 derart anpassen kann, dass dessen Energieverbrauch minimiert werden kann. In ähnlicher Weise ist dem weiteren Zugangsnetz 21 als Netzelement ein DSLAM 160 zugeordnet, welches wiederum eine Steuereinrichtung 161 und eine Speichereinrichtung (nicht dargestellt) aufweisen kann. Die Steuereinrichtung 161 ist ähnlich der Steuereinrichtung 131 des DSLAMs 130 ausgebildet. In den Speichereinrichtungen können Datenverkehrs-Prognosedaten oder Datenverkehrsprognosen zum Beispiel als zeitbasierte Kurven abgelegt werden. Die Steuereinrichtung 131 ist derart ausgebildet, dass sie die Datenverkehrs-Prognosedaten der untergeordneten Netzebenen 10 und 11 der nächsthöheren Netzebene 30, also dem Aggregationsnetz, übergeben kann. In ähnlicher Weise kann Steuereinrichtung 161 veranlassen, dass die Datenverkehrs-Prognosedaten untergeordneter Netzebenen (nicht dargestellt) der nächsthöheren Netzebene 30 übergeben werden. Als Netzelement oder Zugangsknoten des Aggregationsnetzes 30 kann ein Router 170 vorgesehen sein, der mit den DSLAMs 130 und 160 kommunizieren kann. Der Router 170 weist eine Steuereinrichtung 171 aufweist, die in der Lage ist, die von den DSLAMs 130 und 160 empfangenen Datenverkehrs-Prognosedaten zu empfangen. Unter Ansprechen auf die empfangenen Datenverkehrs-Prognosedaten kann der Router 170 seine Netzwerkressourcen derart zu steuern, dass der Energieverbrauch innerhalb des Aggregationsnetzes 30 minimiert werden kann. Über den Router 170 ist das Aggregationsnetz 30 mit dem Backbonenetz 40 verbunden. Dem Backbonenetz 40 ist ein Netzelement (nicht dargestellt) zugeordnet, welches die vom Router 170 weitergeleiteten Datenverkehrs-Prognosedaten empfangen, auswerten und verarbeiten kann. Das Netzelement ist wiederum in der Lage, aus den empfangenen Datenverkehrs-Prognosedaten seine Netzwerkressourcen derart zu steuern, dass der Energieverbrauch in dem Backbonenetz 40 reduziert werden kann. Wie die Figur zeigt, kann das Backbonenetz 40 über ein Gateway 180 mit einem anderen Netz, zum Bespiel eines anderen Betreibers oder ein Internationales Netz verbunden werden.

Über einen weiteren Router 190 kann eine untergeordnete Netzebene 50, welche beispielsweise ein Rechenzentrum bildet, an das Backbonenetz 40 angeschlossen sein. An das Rechenzentrum 50 sind beispielsweise ein Rechner 210 und eine Speichereinrichtung 200 angeschlossen. Selbstverständlich umfassen Rechenzentren in der Regel mehrere Rechner und Speichereinrichtungen. Eine Steuereinheit 191 des Routers 190 ist derart ausgebildet, dass sie den Datenverkehr innerhalb des Rechenzentrums überwachen und schätzen kann. Die Verkehrsüberwachung- und/ oder Verkehrsschätzung liefert Verkehrsdaten, aus denen die Steuereinrichtung 191 eine Datenverkehrs-Prognose hinsichtlich des Rechenzentrums 50 erstellen kann. Unter Ansprechen auf die ermittelte Datenverkehrs-Prognose kann die Steuereinrichtung 191 die Ressourcen des Routers 190 sowie die Netzressourcen des Rechners 210 und der Speichereinrichtung 200 des Rechenzentrums 50 derart steuern, dass der Energieverbrauch des Rechenzentrums 50 minimiert werden kann. Zudem kann der Router 190 die erstellte Datenverkehrs-Prognose einem vorbestimmten Netzelement des Backbonenetzes 40 übergeben. Das dem Backbonenetz 40 zugeordnete Netzelement ist in der Lage, aus der empfangenen Datenverkehrs-Prognose seine Netzwerkressourcen derart zu steuern, dass der Energieverbrauch im Backbonenetz 40 minimiert werden kann.

Denkbar ist, dass die Netzelemente des Backbonenetz 40 derart ausgebildet sind, dass sie untereinander die empfangenen Datenverkehrs-Prognosen austauschen können, um somit die Zuteilung von Netzressourcen zu optimieren und den Energieverbrauch im Backbonenetz weiter reduzieren zu können.

Gemäß einer beispielhaften Ausführungsform können die Netzelemente (nicht dargestellt) des Backbonenetzes 50 jeweils im Router 170 bzw. 190 implementiert sein.

Das in den Fig. 1 und 2 beispielhaft dargestellte hierarchische Kommunikationsnetzwerk ist somit in der Lage, in Abhängigkeit des zu erwartenden Verkehrsvolumens den Energieverbrauch in jeder Netzebene und somit im gesamten Kommunikationsnetzwerk zu minimieren.

Die Funktionsweise des hierarchischen Kommunikationsnetzwerkes wird nachfolgend detailliert erläutert.

Eine wesentliche Funktionalität des hierarchischen Kommunikationsnetzwerkes ist es, in Abhängigkeit des zu erwarteten Verkehrsaufkommens eine Ressourcen-Steuerung in jeder Netzebene durchzuführen. Hierzu werden Datenverkehrs-Prognosedaten sukzessive von den untersten Netzebenen 10 und 11 über die Netzebenen 20 und 30 zur höchsten Netzebene 40 weitergegeben, wobei die Ressourcen der einzelnen Netzebenen derart angesteuert oder zugeteilt werden, dass der Energiebedarf jeder Netzebene und somit des gesamten Kommunikationsnetzwerkes minimiert werden kann. Im Ergebnis entsteht ein Ressourcen-adaptives Kommunikationsnetzwerk, bei dem gerade so viele Netzressourcen aktiviert oder zugeteilt werden, wie zur Erbringung des erwarteten Verkehrsaufkommens notwendig sind, um den Energiebedarf zu minimieren. Die besondere Effizienz des Kommunikationsnetzwerkes ist darin zu sehen, dass dessen Energieverbrauch nicht in Abhängigkeit des tatsächlich vorliegenden Verkehrsvolumens nachgeführt wird, sondern dass bereits im Vorhinein in Abhängigkeit von vorab erstellten Datenverkehrsprognosen eine Steuerung bzw. Zuteilung der Netzressourcen in jeder Netzebene vorgenommen werden kann. Das beschriebene Verfahren kann somit auch als Verkehrsprognose-basiertes Verfahren zur Senkung des Energieverbrauchs eines hierarchischen Kommunikationsnetzwerkes umschrieben werden. Demzufolge bestimmt der zu erwartende Datenverkehrsdurchsatz - und nicht die geplante Spitzenkapazität - den Energiebedarf des hierarchischen Kommunikationsnetzwerkes.

Angenommen sei nunmehr, dass das Zugriffsgerät 90 den Datenverkehr innerhalb des lokalen Netzes 10 beispielsweise mit einem herkömmlichen Verkehrsmonitoring-Verfahren überwacht und aus den ermittelten Daten eine Schätzung für das zu erwartende Verkehrsaufkommen berechnet. Darüber hinaus kann das Zugriffsgerät 90 derart ausgebildet sein, dass es das Deaktivieren und Aktivieren der an das lokale Netzwerk angeschlossenen Netzelemente 60, 70, 80, 100 und 110 erfassen und daraus den zukünftig zu erwarteten Datenverkehrsdurchsatz ermitteln kann. Darüber hinaus kann das Zugriffsgerät 90 bei einer vorgegebenen Zeitdauer das Deaktivierungs- und Aktivierungsmuster der an das lokale Netzwerk 10 angeschlossenen Netzelemente berechnen.

Bei einer bevorzugten Ausführungsform ist das Zugriffsgerät 90 in der Lage, in Abhängigkeit der ermittelten Daten, insbesondere der ermittelten Datenverkehrs-Prognosedaten, Steuersignale zu erzeugen, über die die Ressourcen der angeschlossenen Netzelemente 60, 70, 80, 100 und 110 sowie der eigenen Netzressourcen eingestellt werden können, um den Energiebedarf im lokalen Netzwerk 10 zu minimieren. So kann das Zugriffsgerät 90 beispielsweise aus den ermittelten Datenverkehrs-Prognosedaten ermitteln, dass in der Zeit zwischen zwei und fünf Uhr morgens lediglich die Sensoren 100 aktiv sind. Demzufolge können die übrigen Netzelemente des lokalen Netzes 10 in einen Standby-Modus geschaltet und die Verarbeitungsgeschwindigkeit des Zugriffsgeräts 90 drastisch reduziert werden.

In ähnlicherweise arbeitet das Zugriffsgerät 150 des lokalen Netzwerkes 11, um den Energieverbrauch im lokalen Netz 11 zu minimieren.

Die Zugriffsgeräte 90 und 150 sind in der Lage, die bereitgestellten Datenverkehrs-Prognosedaten und somit die erstellten Datenverkehrs-Prognosen dem DSLAM 130, welcher dem Zugangsnetz 20 zugeordnet ist, zu übergeben. Der DSLAM 130 empfängt somit die Datenverkehrs-Prognosedaten des lokalen Netzes 10 sowie des lokalen Netzes 11. Auf diese kann der DSLAM 130 auf der Grundlage des zu erwartenden Datenverkehrs in den lokalen Netzen 10 und 11 die Netzressourcen des Zugangsnetzes 20 steuern. Beispielsweise kann er mit Hilfe der Steuerungseinrichtung 131 die CPU-Zeit und die Bitraten der Ports, an welchen das lokale Netz 10 und das lokale Netz 11 angeschlossen sind, derart steuern, dass der Energieverbrauch des DSLAMs 130 minimiert werden kann. Kennt der DSLAM 130 auch den tatsächlichen Datenverkehr des Zugangsnetzes 20, kann dieses Ergebnis zusammen mit den vorliegenden Datenverkehrs-Prognosen verwendet werden, um die Netzressourcen des Zugangsnetzes 20 zu steuern. In ähnlicherweise kann die Steuereinrichtung 161 des DSLAMs 160 unter Ansprechen auf entsprechend vorliegende Datenverkehrs-Prognosen die Ressourcenzuteilung hinsichtlich des Zugangsnetzes 21 steuern, um dessen Energiebedarf zu minimieren. Die DSLAMs 130 und 160 führen nunmehr die Datenverkehrs-Prognosen der lokalen Netze 10 und 11 dem nächsthöheren Aggregationsnetz 30 zu. Hierzu werden die Datenverkehrs-Prognosen hinsichtlich der lokalen Netze 10 und 11 vom DSLAM 130 dem Router 170, welcher dem Aggregationsnetz 30 zugeordnet ist, zugeführt. In ähnlicherweise überträgt der DSLAM 160 die ihm über das Zugangsnetz 21 zugeführten Datenverkehrs-Prognosen zum Router 170. Ausgangspunkt für die Steuerung und Zuteilung der Netzressourcen der verschiedenen Netzebenen ist somit der zu erwartende Verkehrsbedarf der Netzteilnehmer 60, 70, 80, 100 und 110 des lokalen Netzes 10 sowie der Netzelemente des lokalen Netzes 11.

Angemerkt sei, dass beispielsweise der DSLAM 130 die von den lokalen Netzen 10 und 11 übermittelten Datenverkehrs-Prognosen aggregieren kann, um daraus eine sogenannte aggregierte Datenverkehrs-Prognose zu erstellen. Die aggregierte Datenverkehrs-Prognose wird dann zum Router 170 übertragen. Der Router 170 kann unter Ansprechen auf die empfangenen Datenverkehrs-Prognosen seine Netzressourcen derart steuern, dass der Energieverbrauch hinsichtlich des Aggregationsnetzes 30 minimiert wird. Der Router 190 kann wiederum den Verkehrsbedarf des Rechenzentrums 50 überwachen und entsprechende Datenverkehrs-Prognosedaten erstellen. Unter Ansprechen auf die Datenverkehrs-Prognosedaten kann die Steuerung 191 die Ressourcen des Routers 190 sowie die Ressourcen des Speichers 200 und des Rechners 210 derart steuern, dass der Energieverbrauch innerhalb des Rechenzentrums 50 minimiert werden kann. So kann unter Berücksichtigung der ermittelten Datenverkehrs-Prognose die Rechenzeit des Rechners 210 dem zu erwartenden Verkehrsaufkommen angepasst und der in der Speichereinrichtung 200 zur Verfügung stehende Speicherplatz in Abhängigkeit des zu erwartenden Verkehrsaufkommens entsprechend zugeteilt werden. Je nach Implementierung können die Router 170 und 190 ihre hinterlegten Datenverkehrs-Prognosen untereinander austauschen, um die Netzwerkressourcen des Backbone-Netzes 40 optimal an das zu erwartende Verkehrsaufkommen anpassen zu können.

## Patentansprüche

1. Verfahren zur adaptiven Steuerung von Netzwerkressourcen in einem hierarchischen Kommunikationsnetzwerk, mit folgenden Schritten:
- Bereitstellen, in einem vorbestimmten Netzelement (90) einer ersten untergeordneten Netzebene (10), von Datenverkehrs-Prognosedaten hinsichtlich der ersten untergeordneten Netzebene;
- Bereitstellen, in einem vorbestimmten Netzelement (150) einer zweiten untergeordneten Netzebene (11), von Datenverkehrs-Prognosedaten hinsichtlich der zweiten untergeordneten Netzebene (11);
- Übergeben der Datenverkehrs-Prognosedaten einem vorbestimmten Netzelement (130) einer übergeordneten Netzebene (20);
- Steuern der Netzwerkressourcen der übergeordneten Netzebene (20) in Abhängigkeit von den empfangenen Datenverkehrs-Prognosedaten der ersten und zweiten untergeordneten Netzebene (10, 11);
- Übertragen der Datenverkehrs-Prognosedaten der ersten und zweiten untergeordneten Netzebene (10, 11) vom vorbestimmten Netzelement (130) der übergeordneten Netzebene (20) zu einem vorbestimmten Netzelement (170) einer nächsthöheren Netzebene (30); und
- Steuern der Netzwerkressourcen der nächsthöheren Netzebene (30) in Abhängigkeit von den empfangenen Datenverkehrs-Prognosedaten der ersten und zweiten untergeordneten Netzebene (10, 11).

2. Verfahren nach Anspruch 1,
**dadurch gekennzeichnet, dass**
das vorbestimmte Netzelement (130) der übergeordneten Netzebene die empfangenen Datenverkehrs-Prognosedaten der ersten und zweiten untergeordneten Netzebene (10, 11) vor der Übertragung aggregiert.

3. Verfahren nach einem der vorstehenden Ansprüche, **dadurch gekennzeichnet, dass** der Schritt des Bereitstellens von Datenverkehrs-Prognosedaten hinsichtlich der ersten und/oder zweiten untergeordneten Netzebene (10, 11) folgende Schritte aufweist:
Überwachen und Schätzen des zu erwarteten Datenverkehrs in der jeweiligen untergeordneten Netzebene und Ermitteln einer entsprechenden Datenverkehrsprognose.

4. Verfahren nach Anspruch 3,
**dadurch gekennzeichnet, dass**
der Schritt des Überwachens und Schätzens des in der jeweiligen untergeordneten Netzebene zu erwarteten Datenverkehrs folgende Schritte umfasst:
Speichern von vorbestimmten Parametern für jedes Netzelement (60, 70, 80, 100, 110) der jeweiligen untergeordneten Netzebene (10);
Erfassen des Aktivierens oder Deaktivierens von Netzelementen der jeweiligen untergeordneten Netzebene und Berechnen der zu erwarteten Bitrate in Abhängigkeit von den Parametern der Netzelemente.

5. Verfahren nach einem der vorstehenden Ansprüche, **gekennzeichnet durch** folgende Schritte:
- Steuern, hinsichtlich jeder Netzebene, der Netzwerkressourcen des vorbestimmten Netzelements und/oder weiterer Netzelemente der jeweiligen Netzebene in Abhängigkeit von den bereitgestellten Datenverkehrs-Prognosedaten.

6. Verfahren nach einem der vorstehenden Ansprüche,
**dadurch gekennzeichnet, dass**
die bereitgestellten Datenverkehrs-Prognosedaten zu vorbestimmbaren Zeitpunkten aktualisiert werden.

7. Verfahren nach einem der vorstehenden Ansprüche,
**dadurch gekennzeichnet, dass**
die Datenverkehrs-Prognosedaten gemäß einem definierten Signalisierungsprotokoll von einer untergeordneten Netzebene zu einer übergeordneten Netzebene übertragen werden.

8. Hierarchisches Kommunikationsnetzwerk zur adaptiven Steuerung von Netzwerkressourcen, mit einem ersten, einer untergeordneten Netzebene (10) zugeordneten Netzelement (90) und einem zweiten, einer übergeordneten Netzebene, wobei das erste Netzelement eine Einrichtung (94) zum Bereitstellen von Datenverkehrs-Prognosedaten hinsichtlich der untergeordneten Netzebene und eine Einrichtung (92) zum Übergeben der Datenverkehrs-Prognosedaten zu dem zweiten Netzelement (130) aufweist, wobei
das zweite Netzelement (130) eine Einrichtung (131) zum Steuern der Netzwerkressourcen des zweiten Netzelements und/oder weiterer Netzelemente der übergeordneten Netzebene in Abhängigkeit von den Datenverkehrs-Prognosedaten aufweist, und wobei das
zweite Netzelement (130) dazu ausgebildet ist, die Datenverkehrs-Prognosedaten an ein drittes, einer nächsthöheren Netzebene zugeordnetes Netzelement zu übertragen.

## Claims

1. A method for adaptive control of network resources in a hierarchical communications network, the method comprising the following steps:
- providing, in a predetermined network element (90) of a first subordinate network level (10), data traffic forecast data relating to the first subordinate network level;
- providing, in a predetermined network element (150) of a second subordinate network level (11), data traffic forecast data relating to the second subordinate network level (11);
- handing over the data traffic forecast data to a predetermined network element (130) of a superordinate network level (20);
- controlling the network resources of the superordinate network level (20) as a function of the received data traffic forecast data from the first and second subordinate network level (10, 11),
- transmitting the data traffic forecast data of the first and second subordinate network level (10, 11) from the predetermined network element (130) of the superordinate network level (20) to a predetermined network element (170) of a next superior network level (30) and
- controlling the network resources of the next superordinate network level (30) as a function of the received data traffic forecast data from the first and second subordinate network level (10, 11).

2. The method according to claim 1, **characterised in that**
the predetermined network element (130) of the superordinate network level aggregates the received data traffic forecast data of the first and second subordinate network level (10, 11) before transmission.

3. The method according to any one of the preceding claims, **characterised in that** the step of providing data traffic forecast data relating to the first and/or second subordinate network level (10, 11) comprises the following steps:
monitoring and estimating the expected data traffic in the respective subordinate network level and determining a corresponding data traffic forecast.

4. The method according to claim 3, **characterised in that**
the step of monitoring and estimating the expected data traffic in the respective subordinate network level comprises the following steps:
storing predetermined parameters for each network element (60, 70, 80, 100, 110) of the respective subordinate network level (10);
detecting the activation or deactivation of network elements of the respective subordinate network level and caclulating the expected bit rate as a function of the parameters of the network elements.

5. The method according to any one of the preceding claims, **characterised by** the following steps:
- controlling, in relation to each network level, the network resources of the predetermined network element and/or additional network elements of the respective network level as a function of the provided data traffic forecast data.

6. The method according to any one of the preceding claims, **characterised in that** the provided data traffic forecast data are updated at predeterminable times.

7. The method according to any one of the preceding claims, **characterised in that** the data traffic forecast data are transmitted from a subordinate network level to a superordinate network level according to a defined signalling protocol.

8. A hierarchical communications network for adaptive control of network resources, having a first network element (90) assigned to a subordinate network level (10) and a second network element assigned to a superordinate network level, wherein the first network element has a device (94) for providing data traffic forecast data relating to the subordinate network level and a device (92) for handing over the data traffic forecast data to the second network element (130), wherein
the second network element (130) has a device (131) for controlling the network resources of the second network element and/or additional network elements of the superordinate network level as a function of the data traffic forecast data, and wherein the second network element (130) is configured to transmit the data traffic forecast data to a third network element assigned to next superior network level.

## Revendications

1. Procédé de commande adaptative de ressources de réseau au sein d'un réseau de communication hiérarchique comprenant les étapes suivantes :
- fourniture, dans un élément de réseau (90) prédéterminé d'un premier niveau de réseau inférieur (10), de données de prévision de trafic de données relatives au premier niveau de réseau inférieur ;
- fourniture, dans un élément de réseau prédéterminé (150) d'un deuxième niveau de réseau inférieur (11), de données de prévision de trafic de données relatives au deuxième niveau de réseau inférieur (11) ;
- remise des données de prévision de trafic de données à un élément de réseau prédéterminé (130) d'un niveau de réseau supérieur (20) ;
- commande des ressources de réseau du niveau de réseau supérieur (20) en fonction des données de prévision de trafic de données des premier et deuxième niveaux de réseau inférieurs (10, 11) ;
- transmission des données de prévision de trafic de données des premier et deuxième niveaux de réseau inférieurs (10, 11) depuis l'élément de réseau prédéterminé (130) du niveau de réseau supérieur (20) vers un élément de réseau prédéterminé (170) d'un niveau de réseau directement supérieur (30) ; et
- commande des ressources de réseau du niveau de réseau directement supérieur (30) en fonction des données de prévision de trafic de données des premier et deuxième niveaux de réseau inférieurs (10, 11).

2. Procédé selon la revendication 1,
**caractérisé en ce que**
l'élément de réseau prédéterminé (130) du niveau de réseau supérieur agrège les données de prévision de trafic de données des premier et deuxième niveaux de réseau inférieurs (10, 11) avant la transmission.

3. Procédé selon l'une des revendications précédentes, **caractérisé en ce que** l'étape de fourniture des données de prévision de trafic de données relatives au premier et/ou au deuxième niveau de réseau inférieur (10, 11) comprend les étapes suivantes :
surveillance et évaluation du trafic de données attendu dans le niveau de réseau inférieur respectif et recherche d'une prévision de trafic de données correspondante.

4. Procédé selon la revendication 3,
**caractérisé en ce que**
l'étape de surveillance et d'évaluation du trafic de données attendu dans le niveau de réseau inférieur respectif comprend les étapes suivantes :
enregistrement de paramètres prédéterminés pour chaque élément de réseau (60, 70, 80, 100, 110) du niveau de réseau inférieur respectif (10) ;
détection de l'activation ou de la désactivation d'éléments de réseau du niveau de réseau inférieur respectif et calcul du débit binaire attendu en fonction des paramètres des éléments de réseau.

5. Procédé selon l'une des revendications précédentes, **caractérisé par** les étapes suivantes :
- commande, pour chaque niveau de réseau, des ressources de réseau de l'élément de réseau prédéterminé et/ou d'autres éléments de réseau du niveau de réseau respectif en fonction des données de prévision de trafic de données fournies.

6. Procédé selon l'une des revendications précédentes, **caractérisé en ce que** les données de prévision de trafic de données fournies sont mises à jour à des moments pouvant être prédéterminés.

7. Procédé selon l'une des revendications précédentes, **caractérisé en ce que** les données de prévision de trafic de données sont transmises depuis un niveau de réseau inférieur vers un niveau de réseau supérieur selon un protocole de signalisation défini.

8. Réseau de communication hiérarchique pour la commande adaptative de ressources de réseau, comprenant un premier élément de réseau (90) associé à un niveau de réseau inférieur (10) et un deuxième élément de réseau associé à un niveau de réseau supérieur, le premier élément de réseau comportant un dispositif (94) pour la fourniture de données de prévision de trafic de données relatives au niveau de réseau inférieur, et un dispositif (92) pour la remise des données de prévision de trafic de données au deuxième élément de réseau (130),
le deuxième élément de réseau (130) comportant un dispositif (131) pour la commande des ressources de réseau du deuxième élément de réseau et/ou d'autres éléments de réseau du niveau de réseau supérieur en fonction des données de prévision de trafic de données, et le deuxième élément de réseau (130) étant conçu pour transmettre les données de trafic de données à un troisième élément de réseau associé à un niveau de réseau directement supérieur.
